Europäisches Patentamt

European Patent Office

Office européen des brevets

(19)

(11) Veröffentlichungsnummer: **0 312 523**
**A1**

(12) **EUROPÄISCHE PATENTANMELDUNG**

(21) Anmeldenummer: 88890261.6

(22) Anmeldetag: **17.10.88**

(51) Int. Cl.⁴: **B 65 G 27/32**
**B 65 G 27/08**

(30) Priorität: **15.10.87 AT 2729/87**

(43) Veröffentlichungstag der Anmeldung:
**19.04.89 Patentblatt 89/16**

(84) Benannte Vertragsstaaten:
**CH DE FR GB LI NL**

(71) Anmelder: **Seylehner, Gerhard**
**St. Bertholdallee 19/5**
**A-4451 Garsten (AT)**

(72) Erfinder: **Seylehner, Gerhard**
**St. Bertholdallee 19/5**
**A-4451 Garsten (AT)**

(74) Vertreter: **Hübscher, Helmut, Dipl.-Ing. et al**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz (AT)**

(54) **Schwingförderer für den Transport von Kleinteilen.**

(57) Ein Schwingförderer (1) für den Transport von Kleinteilen weist einen über Biegefedern (3) schwingend an einem Grundkörper (2) abgestützten Schienenträger (4) zur Aufnahme einer Förderschiene (7) und einen Antrieb (5) zur Schwingungserregung auf, wobei die Biegefedern (3) an den zugehorigen Widerlagern (9) festschraubbar sind und die am grundkörperseitigen Widerlager (9) angreifende Schraube wenigstens einer Feder (3) eine Einstellschraube (8) bildet.

Um auf einfache, feinfühlige Weise eine Abstimmung des Schwingförderers (1) an unterschiedliche Förderverhältnisse zu erreichen, ist zumindest die einstellbare Biegefeder (3) aus drei nebeneinander angeordneten Blattfedern (3a, 3b) zusammengesetzt und die Federcharakteristik durch verschieden starkes Anziehen der die Einstellschraube (8) bildenden Befestigungsschraube der mittleren Blattfeder (3b) veränderbar.

FIG.1

EP 0 312 523 A1

**Beschreibung**

## Schwingförderer für den Transport von Kleinteilen

Die Erfindung bezieht sich auf einen Schwingförderer für den Transport von Kleinteilen, insbesondere für das Zubringen elektronischer Bauelemente zu Platinen-Bestückungsautomaten, mit einem über Biegefedern schwingend an einem Grundkörper abgestützten Schienenträger zur Aufnahme einer Förderschiene und einem Antrieb zur Schwingungserregung, wobei die Biegefedern an den zugehörigen schienenträger-und grundkörperseitigen Widerlagern festschraubbar sind und vorzugsweise die am grundkörperseitigen Widerlager angreifende Schraube wenigstens einer Biegefeder eine Einstellschraube zur Änderung der Federcharakteristik bildet.

Damit solche Schwingförderer mit entsprechendem Wirkungsgrad arbeiten und bestimmte Förderleistungen erbringen können, müssen die Massen- und Federcharakteristika des schwingenden Systems in Abhängigkeit vom Schwingungserreger genau aufeinander abgestimmt sein. Werden daher bei einem Schwingförderer die Förderschienen ausgetauscht, um sie in Form und Größe an das jeweilige Fördergut anzupassen, ändert sich zwangsweise durch diesen Schienentausch auch die schwingende Masse, so daß eine Neuabstimmung des Schwingungssystems erforderlich ist. Zu einer solchen Neuabstimmung oder zur Regelung der Fördergeschwindigkeit wurde bereits vorgeschlagen, plattenförmige Biegefedern über Einstellhebel und an diesen angreifenden Einstellschrauben in ihrer Vorspannung zu ändern (DE-AS 1 290 869) oder Blattfederpakete durch Andrücken von Einstellzungen in ihrem Schwingungsverhalten zu beeinflussen (FR-PS 23 30 613). Auch gibt es schon Schwingförderer mit Biegefedern, deren Befestigungsschrauben als Einstellschrauben dienen, wobei zur Anpassung des Schwingungsverhaltens an verschiedene Gegebenheiten eine Änderung der Feder-Einspannlänge notwendig ist (US-PS 3 817 370).

Alle diese bekannten Möglichkeiten sind allerdings recht aufwendig und erlauben vor allem nur eine umständliche und grobe Beeinflussung des Schwingungssystems, die für eine Förderung heikler Kleinteile unbefriedigend bleibt.

Der Erfindung liegt daher die Aufgabe zugrunde, diese Mängel zu beseitigen und einen Schwingförderer der eingangs geschilderten Art zu schaffen, der in seinem Schwingungsverhalten schnell und mühelos und dabei besonders feinfühlig auf unterschiedlichste Förderbedingungen und Fördergeschwindigkeiten abgestimmt werden kann.

Die Erfindung löst diese Aufgabe dadurch, daß zumindest die einstellbare Biegefeder aus drei nebeneinander angeordneten Blattfedern zusammengesetzt und die Federcharakteristik durch verschieden starkes Anziehen der die Einstellschraube bildenden Befestigungsschraube der mittleren Blattfeder veränderbar ist.

Durch mehr oder weniger starkes Anziehen dieser Einstellschraube wird die mittlere Blattfeder mehr oder weniger stark festgeklemmt und dadurch das Schwingungsverhalten des ganzen Förderers beeinflußt. Zur Abstimmung des schwingenden Systems auf bauliche Veränderungen od.dgl. braucht daher lediglich die Einstellschraube im erforderlichen Ausmaß verdreht zu werden, so daß der Schwingförderer auf rationelle Weise etwa auf eine beliebige Förderschiene abgestellt oder aber auch bei bestehender Abstimmung zwischen Massen und Federn und bei vorgegebenem Antrieb und gleichbleibender Schwingungserregung in seiner Fördergeschwindigkeit gesteuert werden kann. Dabei führt die Aufteilung der Biegefedern in jeweils drei Blattfedern zu einem ruhigen Schwingungsverhalten und damit zu einem gleichmäßigen Fördereffekt, wozu noch kommt, daß der Ansatz der Einstellschraube an der mittleren Blattfeder eine sehr feine und exakt vorzunehmende Änderung der Gesamtfedercharakteristik gewährleistet und eine sogar bis zur vollen Entspannung der mittleren Blattfeder gehende Abstimmung des Schwingungsverhaltens ohne jede Gefährdung der oft sehr wichtigen Lagejustierung für den Schienenträger bzw. die Förderschiene ermöglicht.

Als Einstellschraube können verschiedenste Klemmschrauben Verwendung finden, beispielsweise kann erfindungsgemäß als Einstellschraube eine im Widerlager eingeschraubte Stiftschraube vorgesehen sein, auf der eine über eine Sicherungsfeder belastete Stellmutter sitzt. Durch einfaches händisches Verdrehen der Stellmutter läßt sich die Einspannung der Biegefeder verändern, wobei weder die Stiftschraube als Losteil vorliegt, noch aufgrund der Sicherungsfeder die Gefahr besteht, daß vibrationsbedingt die Stellmutter die vorgewählte Einspannung der Biegefeder lockert.

In der Zeichnung ist der Erfindungsgegenstand an Hand eines Ausführungsbeispieles rein schematisch veranschaulicht, und zwar zeigen

    Fig. 1 einen erfindungsgemäßen Schwingförderer in Seitenansicht,

    Fig. 2 einen Teil dieses Förderers in Stirnansicht nach Pfeil II der Fig. 1 in größerem Maßstab und

    Fig. 3 einen Schnitt nach der Linie III-III der Fig. 2.

Um Chips einem Platinen-Beschickungsautomaten zubringen oder andere Kleinteile transportieren und bestimmte Fördergeschwindigkeiten einhalten zu können, ist ein Schwingförderer 1 vorgesehen, der aus einem Grundkörper 2, einem über Biegefedern 3 am Grundkörper 2 schwingend abgestützten Schienenträger 4 und einem elektromagnetischen Antrieb 5 zur Schwingungserregung besteht. Wird an den Antrieb 5 eine Wechselspannung angelegt, kommt es zu einer Schwingbewegung des Schienenträgers 4, die wegen der Schrägstellung der Biegefedern 3 das Fördergut schrittweise vorwärtswerfend weiterfördert, wobei eine über Magnetstreifen 6 am Schienenträger 4 aufsetzbare Förderschiene 7 dem Fördergut die erforderliche Führung bietet.

Da die Förderschiene 7 an das jeweilige Fördergut angepaßt sein soll, sind die Förderschienen 7 austauschbar, wodurch sich die schwingende Masse des Schwingförderers ändert. Um nun die Federcharakteristik der Biegefedern 3 auf die unterschiedlichen Massen abstimmen zu können, wird eine der Biegefedern 3 mittels einer Einstellschraube 8 am zugehörigen grundkörperseitigen Widerlager 9 festgespannt, so daß sich durch Anziehen oder Lockern der Einstellschraube 8 die Einspannverhältnisse für die Biegefedern 3 ändern und damit das Schwingungsverhalten des Schwingförderers 1 entsprechend beeinflußt werden kann, was zusätzlich auch eine Regelung der Fördergeschwindigkeit innerhalb weiter Bereiche erlaubt.

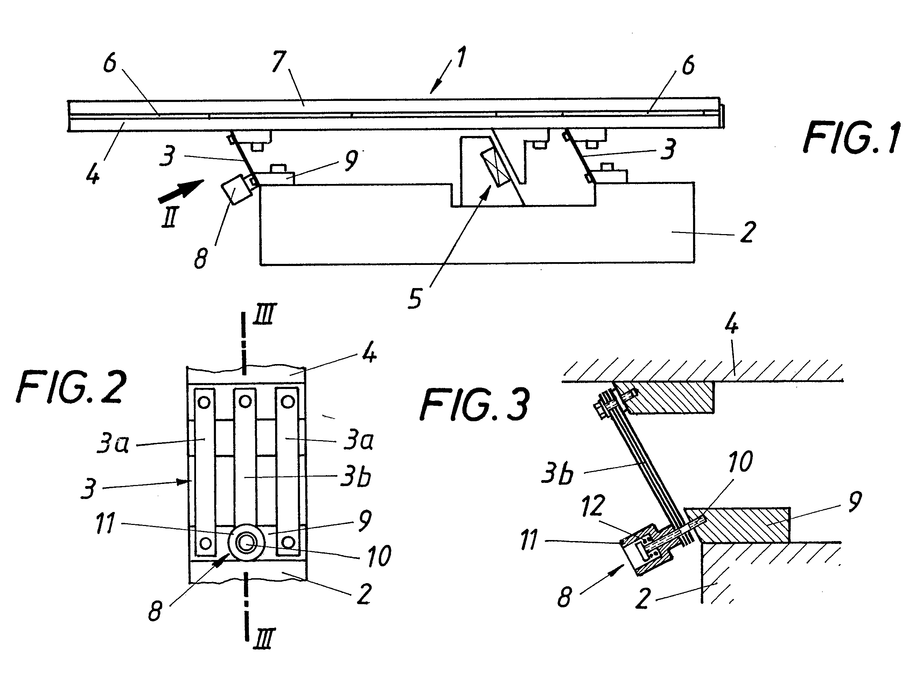

Als Biegefedern sind, um einen ruhigen, gleichmäßigen Fördereffekt zu erreichen, jeweils drei nebeneinander angeordnete Blattfedern 3a, 3b vorgesehen, von denen die mittlere 3b mit der Einstellschraube 8 verspannbar ist. Die Einstellschraube 8 besteht, wie in Fig. 3 angedeutet, aus einer im Widerlager 9 eingeschraubten Stiftschraube 10, die die Blattfeder 3b durchsetzt und die mit einer Stellmutter 11 bestückt ist. Eine Sicherungsfeder 12 belastet die Stellmutter 11, um ein unerwünschtes Lockern zu verhindern, und durch Verdrehen der Stellmutter 11 läßt sich nun die Blattfeder 3b mehr oder weniger fest am Widerlager 9 einspannen.

Ein einfaches, händisches Betätigen der Stellmutter 11 bringt daher die gewünschte Anpassung des Schwingförderers 1 an unterschiedliche Förderverhältnisse oder eine Änderung der Fördergeschwindigkeit mit sich.

## Patentansprüche

1. Schwingförderer für den Transport von Kleinteilen, insbesondere für das Zubringen elektronischer Bauelemente zu Platinen-Bestückungsautomaten, mit einem über Biegefedern schwingend an einem Grundkörper abgestützten Schienenträger zur Aufnahme einer Förderschiene und einem Antrieb zur Schwingungserregung, wobei die Biegefedern an den zugehorigen schienenträger- und grundkörperseitigen Widerlagern festschraubbar sind und vorzugsweise die am grundkörperseitigen Widerlager angreifende Schraube wenigstens einer Biegefeder eine Einstellschraube zur Änderung der Federcharakteristik bildet, dadurch gekennzeichnet, daß zumindest die einstellbare Biegefeder (3) aus drei nebeneinander angeordneten Blattfedern (3a, 3b) zusammengesetzt und die Federcharakteristik durch verschieden starkes Anziehen der die Einstellschraube (8) bildenden Befestigungsschraube der mittleren Blattfeder (3b) veränderbar ist.

2. Schwingförderer nach Anspruch 1, dadurch gekennzeichnet, daß als Einstellschraube (8) eine im Widerlager (9) eingeschraubte Stiftschraube (10) vorgesehen ist, auf der eine über eine Sicherungsfeder (12) belastete Stellmutter (11) sitzt.

FIG.1

FIG.2

FIG.3

EP 0 312 523 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 095 747  (MORRIS)<br>* Insgesamt, insbesondere Figuren 1,8 * | 1 | B 65 G   27/32<br>B 65 G   27/08 |
| Y | | 2 | |
| | --- | | |
| Y | DE-A-2 532 547  (FMC CORP.)<br>* Figur 4; Ansprüche 1-7 * & FR-A-2 330<br>613 (Kat.D)<br>----- | 2 | |

RECHERCHIERTE SACHGEBIETE (Int. Cl.4)

B 65 G

/

Der vorliegende Recherchenbericht wurde für alle Patentansprüche erstellt

| Recherchenort | Abschlußdatum der Recherche | Prüfer |
|---|---|---|
| DEN HAAG | 29-12-1988 | WERNER D.M. |

EPO FORM 1503 03.82 (P0403)